# EUROPÄISCHE PATENTSCHRIFT

(11) **EP 2 084 458 B1**
(45) Veröffentlichungstag und Bekanntmachung des Hinweises auf die Patenterteilung: **27.10.2021**
(21) Anmeldenummer: 07818435.5
(22) Anmeldetag: 26.09.2007
(51) Int. Cl.: F23L 13/10, F23L 11/00, F16K 1/24

(54) **ABSPERRKLAPPE INSBESONDERE ZUR VERWENDUNG IN EINER VORRICHTUNG ZUR ABGASREINIGUNG**
SHUT-OFF FLAP, IN PARTICULAR FOR USE IN A DEVICE FOR EXHAUST-GAS PURIFICATION
CLAPET D'ARRÊT À UTILISER NOTAMMENT DANS UN DISPOSITIF D'ÉPURATION D'EFFLUENTS GAZEUX

(30) Priorität: 25.10.2006 DE 102006050213
(43) Veröffentlichungstag der Anmeldung: 05.08.2009
(73) Patentinhaber: Eisenmann SE, 71032 Böblingen (DE)
(72) Erfinder: KATEFIDIS, Apostolos, 71116 Gärtringen (DE)
(74) Vertreter: Ostertag & Partner Patentanwälte mbB
(86) Internationale Anmeldenummer: PCT/EP2007/008351
(87) Internationale Veröffentlichungsnummer: WO 2008/049496

(56) Entgegenhaltungen:
- EP-A- 0 684 414
- EP-A- 1 103 492
- EP-A- 1 369 640
- DE-A1- 2 358 492
- DE-T2- 3 779 492
- JP-A- 58 024 671
- US-A- 3 173 356
- US-A- 3 273 854
- US-A- 4 457 294
- US-A- 4 480 812
- US-A- 5 305 985
- US-A- 5 437 574
- US-A1- 2002 171 058

## Beschreibung

Die Erfindung betrifft eine Absperrklappe insbesondere zur Verwendung in einer Vorrichtung zur Abgasreinigung, insbesondere zur regenerativen Nachverbrennung von Teer- und/oder Kohle- und/oder Graphitpartikeln in Abluft, mit einem Klappenblatt, welches zum Verschließen einer Ventilöffnung an einer dortigen Dichtfläche anliegt.

Bei marktbekannten Abgasreinigungsvorrichtungen insbesondere in der Kohle-Graphit-Industrie verklebt die teerhaltige Abluft mit der Zeit die Dichtflächen der Absperrklappen, so dass diese sich nicht mehr oder nur mit großem Kraftaufwand öffnen lassen. Außerdem baut sich auf den Dichtflächen eine Schicht auf, so dass die Absperrklappen im Laufe der Zeit undicht werden. Bei Absperrklappen, die axial über einen Hubkolben betätigt werden, verschmutzen zusätzlich noch die Hubkolben und versagen ihren Dienst.

Offenlegungen, die Teil des Stands der Technik ausmachen, umfassen EP 1 369 640 A, JP 58 024671 A, EP 1 103 492 A, US 4 457 294 A. Aufgabe der vorliegenden Erfindung ist es, eine Absperrklappe der eingangs genannten Art so auszugestalten, dass sie selbst nach längerer Betriebszeit noch dicht ist und ohne großen Kraftaufwand betätigt werden kann.

Diese Aufgabe wird erfindungsgemäß dadurch gelöst, dass das Klappenblatt über wenigstens eine bewegliche Verbindung an einem freien Ende eines Schwenkarms schwenkbar befestigt ist und der Schwenkarm über ein Grund-Schwenkgelenk relativ zur Dichtfläche schwenkbar befestigt ist, derart, dass das Klappenblatt zum Verschließen der Ventilöffnung zunächst eine Bewegung auf die Dichtfläche zu und beim Anliegen an der Dichtfläche eine Bewegung parallel zur Dichtfläche ausführt.

Erfindungsgemäß ist also ein Klappenblatt derart an einem Schwenkarm befestigt, dass es beim Auftreffen auf die Dichtfläche parallel zur Dichtfläche versetzt wird und dabei etwaige Unebenheiten zwischen der Dichtfläche und dem Klappenblatt abschabt. Auf diese Weise reinigt sich die Absperrklappe bei jedem Schließvorgang selbst und entfernt etwaige Ablagerungen, die sonst zur Undichtigkeit der Absperrklappe führen würden. Beim Öffnen der Absperrklappe kann ebenfalls eine leichte Parallelverschiebung in entgegengesetzter Richtung wie beim Schließen stattfinden, wodurch etwaige Verklebungen gelöst werden und der Kraftaufwand beim Öffnen deutlich reduziert wird.

Gemäß der Erfindung kann das Klappenblatt über ein Klappen-Schwenkgelenk an einem freien Ende des Schwenkarms schwenkbar befestigt sein; der Schwenkarm kann wenigstens einen inneren Schwenkarmteil und einen dem Klappenblatt zugewandten äußeren Schwenkarmteil aufweisen, die über ein Schwenkarmgelenk verbunden sind, und der innere Schwenkarmteil kann über das Grund-Schwenkgelenk relativ zur Dichtfläche schwenkbar befestigt sein. Schwenkgelenke haben den Vorteil, dass sie ohne großen Kraftaufwand geschwenkt werden können und die Schwenkrichtung präzise vorgeben.

Vorteilhafterweise können die Schwenkachsen des Grund-Schwenkgelenks, des Schwenkarmgelenks und des Klappen-Schwenkgelenks parallel verlaufen und das Klappen-Schwenkgelenk kann bezüglich des Schwenkarmgelenks so positioniert sein, dass beim Schließen des Absperrventils das an der Dichtfläche anliegende Klappenblatt ein Drehmoment auf den äußeren Schwenkarmteil ausübt, welches das Schwenken des äußeren Schwenkarmteils und eine Verschiebung des Klappenblatts parallel zur Dichtfläche bewirkt. Dadurch, dass alle Schwenkachsen parallel verlaufen, findet die gesamte Bewegung des Schwerpunktes des Klappenblatts in einer einzigen Schwenkebene statt. Die spezielle Anordnung der Schwenkgelenke ermöglicht so, dass die Schließkraft auf das Klappenblatt auch die Parallelverschiebung bewirkt.

Zweckmäßigerweise kann das Schwenkarmgelenk über ein Anschlagmittel verfügen, welches die Schwenkbewegung des äußeren Schwenkarmteils relativ zu dem inneren Schwenkarmteil wenigstens beim Schließen der Absperrklappe begrenzt. Auf diese Weise wird verhindert, dass der Schwenkarm nach Erreichen der Schließstellung eine weitere Parallelverschiebung bewirkt. Die Schließkraft wird in der Schließstellung dann ausschließlich zum Anpressen des Klappenblatts auf die Dichtfläche genutzt.

Um beim Öffnen der Absperrklappe einfach die Parallelverschiebung des Klappenblatts in die entgegengesetzte Richtung zu erreichen, kann das Schwenkarmgelenk ein Rückstellelement aufweisen, welches in einer der geschlossenen Absperrklappe entsprechenden Schließstellung der Schwenkarmteile gespannt ist und das den äußeren Schwenkarmteil beim Öffnen der Absperrklappe aus der Schließstellung in eine Öffnungsstellung schwenkt.

Ferner kann das Klappen-Schwenkgelenk über ein Anschlagmittel verfügen, welches die Schwenkbewegung des Klappenblatts relativ zum äußeren Schwenkarmteil wenigstens beim Öffnen der Absperrklappe begrenzt. Auf diese Weise kann das Klappenblatt beim Öffnen zunächst an einer Seite von der Dichtfläche angehoben werden, so dass Verklebungen einfach gelöst werden und ein kraftsparender Öffnungsvorgang ermöglicht wird.

Um einen kontinuierlichen Bewegungsablauf beim Schließen der Absperrklappe zu realisieren, können das Klappenblatt und die Dichtfläche eben sein.

Gemäß einer alternativen Erfindung kann das Klappenblatt über eine federnde Anpresseinheit, insbesondere eine Blattfeder, an dem freien Ende des Schwenkarms befestigt sein. Federnde Anpresseinheiten können einfach und kostengünstig realisiert werden. Ausführungsbeispiele der Erfindung werden nachfolgend anhand der Zeichnung näher erläutert; es zeigen
- Figur 1: schematisch einen seitlichen Schnitt eines ersten Ausführungsbeispiels einer selbstreinigenden Absperrklappe in geöffneter Stellung;
- Figur 2: schematisch die Absperrklappe gemäß Figur 1 in geschlossener Stellung;
- Figur 3: schematisch einen seitlichen Schnitt eines zweiten Ausführungsbeispiels einer selbstreinigenden Absperrklappe in geöffneter Stellung;
- Figur 4: schematisch die Absperrklappe gemäß Figur 3 in geschlossener Stellung.

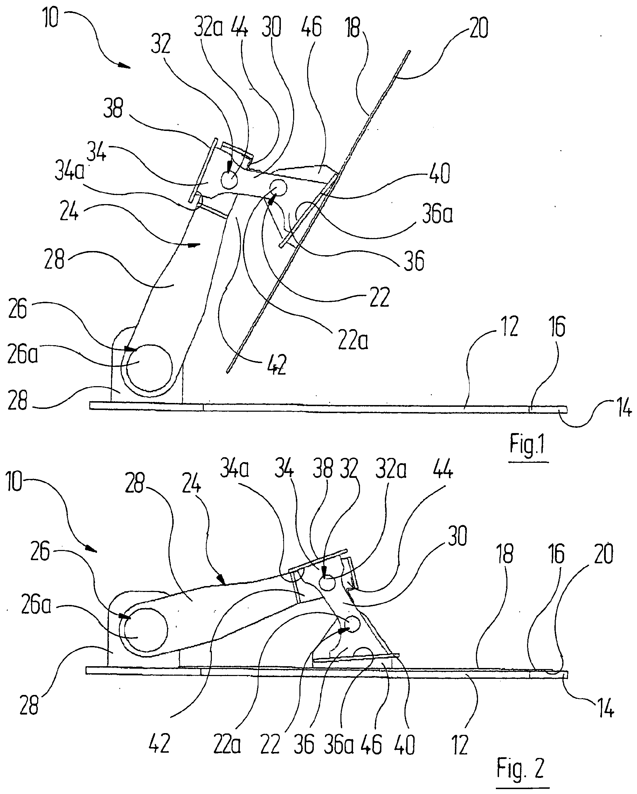

In Figur 1 ist ein erstes Ausführungsbeispiel einer insgesamt mit dem Bezugszeichen 10 versehene selbstreinigende Absperrklappe einer ansonsten nicht gezeigten Vorrichtung zur regenerativen Nachverbrennung von Teer-, Kohle- und Graphitpartikeln in Abluft in geöffneter Stellung, und in Figur 2 in geschlossener Stellung dargestellt.

Die Absperrklappe 10 dient zur Unterbrechung oder Umleitung eines Abluftstromes in der Vorrichtung. Sie ist unmittelbar an einer Ventilöffnung 12 angebracht, welche mit ihr verschlossen werden kann.

Die Ventilöffnung 12 befindet sich in einer in den Figuren 1 und 2 horizontal verlaufenden Begrenzungswand 14. Die Begrenzungswand 14 trennt zwei Bereiche voneinander, in den Figuren oben und unten, beispielsweise eine ansonsten nicht gezeigte Abgasleitung vom Inneren einer Regenerationssäule.

Der die Ventilöffnung 12 umgebende ebene Randbereich der Begrenzungswand 14 auf der der Absperrklappe 10 zugewandten Seite dient als Öffnungs-Dichtfläche 16.

Die Absperrklappe 10 weist ein Klappenblatt 18 auf, welches bei geschlossener Absperrklappe 10 (Figur 2) die Ventilöffnung 12 deutlich überragt. Der die Öffnungs-Dichtfläche 16 umfänglich überlappende, dieser zugewandte Randbereich des Klappenblatts 18 bildet eine zur Öffnungs-Dichtfläche 16 komplementäre Klappen-Dichtfläche 20. Die Klappen-Dichtfläche 20 wirkt mit der Öffnungs-Dichtfläche 16 zusammen und verschließt so die Ventilöffnung 12.

Das Klappenblatt 18 ist über ein Klappen-Schwenkgelenk 22 an einem freien Ende eines mehrgliedrigen Schwenkarms 24 befestigt. Der Schwenkarm 24 ist seinerseits über ein Grund-Schwenkgelenk 26 mit einer Doppellasche 28 an der Begrenzungswand 14 befestigt, welche sich seitlich neben der Ventilöffnung 12 auf der Seite der Öffnungs-Dichtfläche 16 befindet, und ist relativ zur Öffnungs-Dichtfläche 16 schwenkbar.

Der Schwenkarm 24 umfaßt einen inneren Schwenkarmteil 28 und einen äußeren Schwenkarmteil 30, die über ein Schwenkarmgelenk 32 schwenkbar miteinander verbunden sind.

Der innere Schwenkarmteil 28 trägt an seinem dem Grund-Schwenkgelenk 26 abgewandten Ende das Schwenkarmgelenk 32, von dem der äußere Schwenkarmteil 30 wegführt.

An dem gegenüberliegenden Ende des äußeren Schwenkarmteils 30 ist das Klappen-Schwenkgelenk 22 angeordnet.

Die Schwenkachsen 26a, 32a und 22a des Grund-Schwenkgelenks 26, des Schwenkarmgelenks 32 beziehungsweise des Klappen-Schwenkgelenks 22 verlaufen parallel zueinander, so dass der Schwerpunkt des Klappenblatts 18 in einer einzigen Schwenkebene geschwenkt werden kann, welche senkrecht zu den Schwenkachsen 26a, 32a und 22a, in den Figuren 1 und 2 parallel zur Zeichenebene, verläuft.

Der äußere Schwenkarmteil 30 weist an seinem dem Schwenkarmgelenk 32 zugewandten Ende eine Schwenkarm-Verbreiterung 34 und am anderen Ende ein Klappen-Verbreiterung 36 auf. Im jeweiligen Übergangsbereich vom Mittelbereich des äußeren Schwenkarmteils 30 zu der Schwenkarm-Verbreiterung 34 beziehungsweise der Klappen-Verbreiterung 36 befinden sich die Schwenkachsen 32a und 22a des Schwenkarmgelenks 32 beziehungsweise des Klappen-Schwenkgelenks 22.

Die Schwenkarm-Verbreiterung 34 und die Klappen-Verbreiterung 36 sind auf ihren dem Mittelbereich abgewandten Außenseiten jeweils durch eine ebene Fläche 34a beziehungsweise 36a begrenzt. Die ebenen Flächen 34a und 36a erstrecken sich senkrecht zur Schwenkebene. Die ebene Fläche 34a der Schwenkarm-Verbreiterung 34 ist außerdem um etwa 75° gegenüber einer gedachten Längsachse des äußeren Schwenkarmteils 30 geneigt, welche senkrecht durch die Schwenkachsen 32a, 22a des Schwenkarmgelenks 32 und des Klappen-Schwenkgelenks 22 verläuft. Die ebene Fläche 36a der Klappen-Verbreiterung 36 ist entsprechend in gleicher Richtung um etwa 60° gegenüber der Längsachse des äußeren Schwenkarmteils 30 geneigt. Insgesamt laufen die ebenen Flächen 34a und 36a in ihrer jeweiligen Verlängerung in Richtung auf das Grund-Schwenkgelenks 26 aufeinander zu.

Die Schwenkarm-Verbreiterung 34 erstreckt sich in der Schwenkebene beidseitig der Längsachse des äußeren Schwenkarmteils 30 senkrecht zu dieser etwa in gleichem Maße. Die Ausdehnung der Klappen-Verbreiterung 36 in der Schwenkebene ist auf der dem Grund-Schwenkgelenk 26 zugewandten Seite der Längsachse des äußeren Schwenkarmteils 30 senkrecht zu dieser deutlich größer als auf der anderen Seite und auch größer als die Ausdehnung der Schwenkarm-Verbreiterung 34.

Auf der ebenen Fläche 34a der Schwenkarm-Verbreiterung 34 ist flächig eine ebene Schwenkarm-Anschlagplatte 38 befestigt. Auf der ebenen Fläche 36a der Klappen-Verbreiterung 36 ist ebenfalls flächig eine ebene Klappen-Anschlagplatte 40 befestigt. Die Schwenkarm-Anschlagplatte 38 und die Klappen-Anschlagplatte 40 überragen die ebenen Flächen 34a beziehungsweise 36a jeweils deutlich; ihre jeweilige Funktion ist weiter unten näher erläutert.

Der innere Schwenkarmteil 28 hat einen im wesentlichen rechteckigen Querschnitt, der sich in Richtung auf sein das Schwenkarmgelenk 32 aufweisendes freies Ende etwas verjüngt. An diesem Ende weist er eine kastenähnliche Aufnahme 42 für den dortigen Endbereich des äußeren Schwenkarmteils 30 auf. Die Aufnahme 42 erstreckt sich zwischen den beiden senkrecht zur Schwenkebene verlaufenden Längsseiten des inneren Schwenkarmteils 28 und ist zu den beiden Längsseiten hin, in Figur 2 oben und unten, offen. Die Schwenkachse 32a des Schwenkarmgelenks 32 ist mit ihren Enden jeweils an einer der beiden anderen Längsseiten des inneren Schwenkarmteils 28 befestigt, die parallel zur Schwenkebene verlaufen und die Aufnahme 42 längsseitig begrenzen.

Der dem Schwenkarmgelenk 32 entsprechende Endbereich des äußeren Schwenkarmteils 30 führt durch die Aufnahme 42 hindurch, derart, dass die Schwenkarm-Anschlagplatte 38 außerhalb der Aufnahme 42 auf der dem Klappenblatt 18 gegenüberliegenden Seite des inneren Schwenkarmteils 28 angeordnet ist. Die dortige Öffnung der Aufnahme 42 ist in Längsrichtung des inneren Schwenkarmteils 28 kleiner als die Schwenkarm-Anschlagplatte 38, so dass letztere beim Schwenken des äußeren Schwenkarmteils 30 beim Erreichen einer, in Figur 2 gezeigten, maximalen Auslenkung auf der dem Grund-Schwenkgelenk 26 zugewandten Seite neben der Öffnung der Aufnahme 42 anschlägt. Die Schwenkarm-Anschlagplatte 38 begrenzt so die Schwenkbewegung des äußeren Schwenkarmteils 30 bezüglich des inneren Schwenkarmteils 28. Die maximalen Auslenkung entspricht der Schließstellung der Absperrklappe 10. Sie ist durch den Abstand zwischen der Schwenkarm-Anschlagplatte 38 und der benachbarten Längsseite des inneren Schwenkarmteils 28 vorgegeben.

Beim Öffnen der Absperrklappe 10 verhindert die Schwenkarm-Anschlagplatte 38 in analoger Weise, dass der äußere Schwenkarmteil 30 zu weit in Richtung des Grund-Schwenkgelenks 26 schwenkt, indem sie auf der gegenüberliegenden Seite am inneren Schwenkarmteil 28 anschlägt.

Die Längsachse des äußeren Schwenkarmteils 30 schließt sowohl in der Öffnungsstellung der Absperrklappe 10 (Figur 1) als auch in deren Schließstellung (Figur 2) in einer Weise mit einer gedachten Längsachse des inneren Schwenkarmteils 28 derart einen Winkel ein, dass beim Schließen der Absperrklappe 10 das Klappenblatt 18 ein Drehmoment auf den äußeren Schwenkarmteil 30 ausüben kann und dieser relativ zum inneren Schwenkarmteil 28 geschwenkt wird. In der Öffnungsstellung der Absperrklappe 10 ist das Klappenblatt 18 um etwa 60° gegenüber der Öffnungs-Dichtfläche 16 geneigt. Die Längsachse des inneren Schwenkarmteils 28 verläuft in der Schwenkebene durch die Schwenkachse 32a des Schwenkarmgelenk 32 und die Schwenkachse 26a des Grund-Schwenkgelenks 26. Die beiden gedachten Längsachsen verlaufen, wie in den Figuren 1 und 2 gezeigt, in der Schwenkebene schräg zueinander, derart, dass die Schwenkachse 22a des Klappen-Schwenkgelenks 22 sich immer auf ein und derselben Seite der Ebene befindet, welche sich in der Schwenkachse 32a des Schwenkarmgelenks 32 senkrecht zur Längsachse des inneren Schwenkarmteils 28 aufspannt. In dem in den Figuren 1 und 2 gezeigte bevorzugten Ausführungsbeispiel ist die Schwenkachse 22a des Klappen-Schwenkgelenks 22 auf der dem Grund-Schwenkgelenk 26 abgewandten Seite der zuvor genannten Ebene angeordnet.

Ferner weist das Schwenkarmgelenk 32 eine Rückstellfeder 44 auf, welche in der in Figur 2 gezeigten Schließstellung der Absperrklappe 10 gespannt ist und die sich beim Öffnen der Absperrklappe 10 entspannt und dadurch den äußeren Schwenkarmteil 30 aus der Schließstellung in die Öffnungsstellung schwenkt.

Die Rückstellfeder 44 befindet sich auf der dem Klappenblatt 18 zugewandten Seite in der Aufnahme 42 des inneren Schwenkarmteils 28 zwischen der dem Grund-Schwenkgelenk 26 abgewandten, die Aufnahme 42 begrenzenden, senkrecht zur Schwenkebene verlaufenden Querwand und der dieser gegenüberliegenden Seitenfläche des äußeren Schwenkarmteils 30, welche sich ebenfalls senkrecht zur Schwenkebene erstrecken. Es handelt sich, wie in den Figuren 1 und 2 abgebildet, um ein im Schnitt entlang der Schwenkebene S-förmiges Federblech, welches mit einem Ende innerhalb der Aufnahme 42 befestigt ist und dessen anderes Ende frei verschiebbar an dem äußeren Schwenkarmteil 30 anliegt.

Das Klappen-Schwenkgelenk 22 umfaßt schließlich zwei gabelförmig angeordnete Klappengelenk-Laschen 46, welche sich parallel zur Schwenkebene erstrecken und die an der der Ventilöffnung 12 abgewandten Oberseite des Klappenblatts 18 befestigt sind. Die Schwenkachse 22a des Klappen-Schwenkgelenks 22 ist an ihren Enden jeweils an einer der Klappengelenk-Laschen 46 befestigt.

Zwischen den beiden Klappengelenk-Laschen 46 ist die Klappen-Verbreiterung 36 des äußeren Schwenkarmteils 30 angeordnet. Die Klappen-Anschlagplatte 40 ist dabei zu der Oberseite des Klappenblatts 18 so angeordnet, dass nur in den beiden gegenüberliegenden Endpositionen des Klappenblatts 18 die entsprechenden Ränder der Klappen-Anschlagplatte 40 an der Oberseite des Klappenblatts 18 anliegen.

Eine der Endpositionen wird in der Öffnungsstellung der Absperrklappe 10 eingenommen, wie in Figur 1 gezeigt. Hier verhindert der dem Grund-Schwenkgelenk 26 abgewandte Rand der Klappen-Anschlagplatte 40, dass das Klappenblatt 18 sich um mehr als 60° gegenüber der Öffnungs-Dichtfläche 16 neigt oder sich gar ganz umdreht, wodurch bei dem nächsten Schließvorgang das Klappenblatt 18 verkehrt herum gegen die Öffnungs-Dichtfläche 16 gepreßt würde und die Absperrklappe 10 zerstört werden könnte.

Die andere, in den Figuren 1 und 2 nicht gezeigte Endposition nimmt das Klappenblatt 18 beim Öffnen der Absperrklappe 10 ein, was weiter unten noch näher erläutert ist.

Der Schließvorgang der Absperrklappe 10 geht folgendermaßen vonstatten:
Ausgehend von der geöffneten Absperrklappe 10 (Figur 1) wird zunächst der innere Schwenkarmteil 28 in bekannter Weise von einem vorgegebenen Schließmoment, das durch einen hier nicht näher beschriebenen, bekannten Schwenkantrieb erzeugt wird, angetrieben um das Grund-Schwenkgelenk 26 in Richtung der Ventilöffnung 12 geschwenkt.

Das Klappenblatt 18 führt zunächst eine Bewegung auf die Öffnungs-Dichtfläche 16 zu aus. Sobald der der Öffnungs-Dichtfläche 16 zugewandte Rand des Klappenblatts 18 an der Öffnungs-Dichtfläche 16 anstößt, schwenkt zunächst das Klappenblatt 18 um das Klappen-Schwenkgelenk 22 und richtet sich beim Weiterschwenken des inneren Schwenkarmteils 28 zunehmend parallel zu der Öffnungs-Dichtfläche 16 aus.

Wenn der dem Grund-Schwenkgelenk 26 zugewandte Rand der Klappen-Anschlagplatte 40 gegen die Oberseite des Klappenblatts 18 stößt, was in den Figuren 1 und 2 nicht gezeigt ist, wird eine weitere Schwenkbewegung des Klappenblatts 18 relativ zum äußeren Schwenkarmteil 30 unterbunden und das Klappenblatt 18 drückt die Klappen-Dichtfläche 20 gegen die Oberseite der Begrenzungswand 14.

Sowie die Klappen-Dichtfläche 20 des Klappenblatts 18 flächig an der Oberseite der Begrenzungswand 14 anliegt, übt das blockierte Klappenblatt 18 als Reaktion auf die Schließkraft ein Drehmoment auf den äußeren Schwenkarmteil 30 aus, das ausreicht, um die Federkraft der Rückstellfeder 44 zu überwinden. Der äußere Schwenkarmteil 30 schwenkt relativ zum inneren Schwenkarmteil 28 von dem Grund-Schwenkgelenk 26 weg, spannt dabei die Rückstellfeder 44 und bewirkt eine Verschiebung der Klappen-Dichtfläche 20 parallel zur Öffnungs-Dichtfläche 16. Hierbei schabt das Klappenblatt 18 etwaige Ablagerungen, welche Unebenheiten verursachen, von der Öffnungs-Dichtfläche 16 und der Klappen-Dichtfläche 20 und glättet diese.

Sobald der dem Grund-Schwenkgelenk 26 zugewandte Rand der Schwenkarm-Anschlagplatte 38 neben der Öffnung der Aufnahme 42 anschlägt, wird hierdurch die Schwenkbewegung des äußeren Schwenkarmteils 30 relativ zu dem inneren Schwenkarmteil 28 begrenzt und damit die Parallelverschiebung des Klappenblatts 18 beendet. Die von dem inneren Schwenkarmteil 28 übertragene Schließkraft bewirkt nun ausschließlich, dass die Klappen-Dichtfläche 20 gegen die Öffnungs-Dichtfläche 16 gepresst wird.

Zum Öffnen der Absperrklappe 10 wird auf den inneren Schwenkarmteil 28 ein zum Schließmoment entgegengesetztes Öffnungsmoment ausgeübt. Der innere Schwenkarmteil 28 schwenkt von der Ventilöffnung 12 weg und entlastet dabei den äußeren Schwenkarmteil 30. Die Rückstellfeder 44 entspannt sich und schwenkt auf diese Weise den äußeren Schwenkarmteil 30 in Richtung auf das Grund-Schwenkgelenk 26. Gleichzeitig führt das Klappenblatt 18 eine Schwenkbewegung relativ zum äußeren Schwenkarmteil 30 aus, so dass das Klappenblatt 18 in Richtung des Grund-Schwenkgelenks 26 parallel zur Öffnungs-Dichtfläche 16 verschoben wird.

Sobald der dem Grund-Schwenkgelenk 26 abgewandte Rand der Klappen-Anschlagplatte 40 an der Oberseite des Klappenblatts 18 anschlägt, übt die Klappen-Anschlagplatte 40 ein Drehmoment auf das Klappenblatt 18 aus, das bewirkt, dass das Klappenblatt 18 mit seinem dem Grund-Schwenkgelenk 26 zugewandten Rand zuerst von der Öffnungs-Dichtfläche 16 abhebt. Beim Weiterschwenken des inneren Schwenkarmteils 28 hebt das Klappenblatt 18 gänzlich von der Öffnungs-Dichtfläche 16 ab, bis schließlich die Absperrklappe 10 ihre anfängliche Öffnungsstellung erreicht hat.

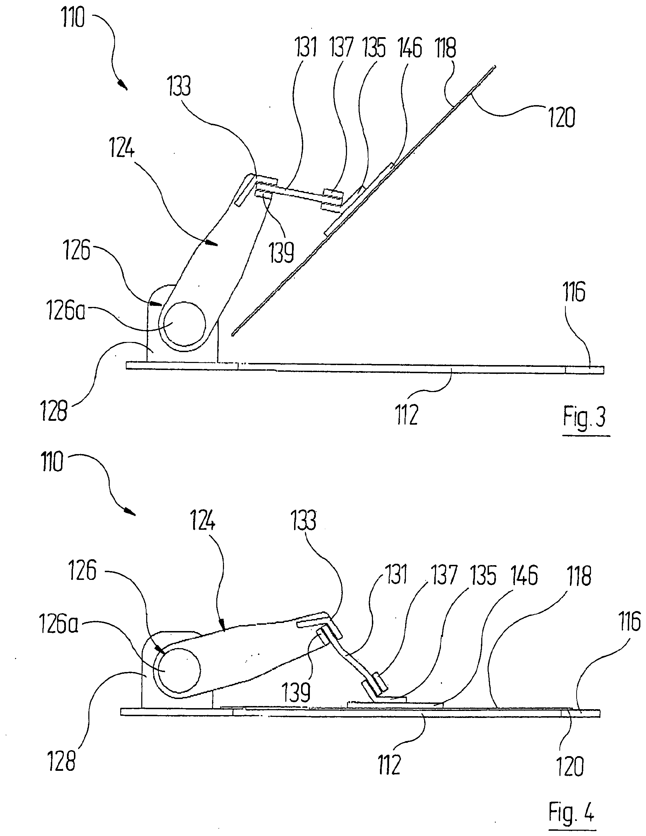

Bei einem zweiten Ausführungsbeispiel, dargestellt in den Figuren 3 und 4, sind diejenigen Elemente, die zu denen des ersten, in den Figuren 1 und 2 beschriebenen Ausführungsbeispiels ähnlich sind, mit denselben Bezugszeichen zuzüglich 100 versehen, so dass bezüglich deren Beschreibung auf die Ausführungen zum ersten Ausführungsbeispiel Bezug genommen wird. Dieses Ausführungsbeispiel einer Absperrklappe 110 unterscheidet sich vom ersten dadurch, dass anstelle des äußeren Schwenkarmteils 30 eine langgestreckte Blattfeder 131 vorgesehen ist, welche an ihren Enden über einen Schwenkarm-Befestigungswinkel 133 beziehungsweise einen Klappen-Befestigungswinkel 135 starr mit dem Schwenkarm 124 beziehungsweise dem Klappenblatt 118 verbunden ist.

Der Schwenkarm 124 beim zweiten Ausführungsbeispiel weist einen einzigen Schwenkarmteil auf, welcher auf der Seite eines Grund-Schwenkgelenks 126 ähnlich zu dem inneren Schwenkarmteil 28 des ersten Ausführungsbeispiels aufgebaut ist. Die Schwenkfunktion des Klappen-Schwenkgelenks 22 und des Schwenkarmgelenks 32 gemäß dem ersten Ausführungsbeispiel wird beim zweiten Ausführungsbeispiel durch entsprechende Verformung der Blattfeder 131 erreicht.

Der Klappen-Befestigungswinkel 135 ist an einem Ende längsseitig auf der dem Grund-Schwenkgelenk 126 zugewandten Seite der Blattfeder 131 befestigt. Sein der Blattfeder 131 abgewandtes Ende ist um etwa 55° von dem Grund-Schwenkgelenk 126 weg gebogen. Am abgewandten Ende ist der Klappen-Befestigungswinkel 135 flächig an einer Klappen-Schwenkfeder-Platte 146 fixiert. Die Klappen-Schwenkfeder-Platte 146 ist auf der der Klappen-Dichtfläche 120 abgewandten Seite des Klappenblatts 118 parallel zu diesem an diesem befestigt.

Auf der dem Grund-Schwenkgelenk 126 abgewandten Seite des äußeren Schwenkarmteils 130 gegenüber dem Klappen-Befestigungswinkel 135 ist außerdem eine Stabilisierungsplatte 137 befestigt, welche die Verbindung des Klappen-Befestigungswinkels 135 mit der Blattfeder 131 stabilisiert und eine bessere Kraftübertragung zwischen der Blattfeder 131 und dem Klappenblatt 118 ermöglicht.

Der Schwenkarm-Befestigungswinkel 133 ist entsprechend am anderen Ende der Blattfeder 131 auf der dem Grund-Schwenkgelenk 126 abgewandten Seite befestigt und mit einer Stabilisierungsplatte 139 auf der gegenüberliegenden Seite stabilisiert. Das der Blattfeder 131 abgewandte Ende des Schwenkarm-Befestigungswinkels 133 ist um etwa 55° zu dem Grund-Schwenkgelenk 126 hin gebogen und am freien Ende des Schwenkarms 124 parallel zu dessen Längsrichtung befestigt.

Die Blattfeder 131 ist so ausgestaltet, dass sie das Gewicht des Klappenblatts 118 hält, ohne sich zu verbiegen. Nur beim Schließen beziehungsweise im geschlossenen Zustand der Absperrklappe 110 (Figur 4) wird/ist die Blattfeder 131 verformt und gespannt, so dass der notwendige Anpressdruck und die gewünschte Gleit- beziehungsweise Abschabwirkung auf der Öffnungs-Dichtfläche 116 erreicht wird.

Die Bewegungen des Klappenblatts 118 des zweiten Ausführungsbeispiels beim Öffnen und Schließen der Absperrklappe 110 entsprechen denen des Klappenblatts 18 beim ersten Ausführungsbeispiel.

Bei allen oben beschriebenen Ausführungsbeispielen von Absperrklappen 10; 110 sind unter anderem folgende Modifikationen möglich:
Die Absperrklappen 10; 110 sind nicht beschränkt auf die Verwendung bei Vorrichtungen zur regenerativen Nachverbrennung von Teer- und/oder Kohle- und/oder Graphitpartikeln in Abluft. Vielmehr können sie auch in andersartigen Abgasreinigungsvorrichtungen verwendet werden, bei denen die Ablagerung von insbesondere klebrigen Schmutzpartikeln auf Dichtflächen einen Problem darstellt.

Der Schwenkarm 24; 124 kann auch mehr als zwei beziehungsweise einen Schwenkarmteil(e) 28, 30 umfassen.

Das Klappenblatt 18; 118 kann in der Öffnungsstellung auch um einen anderen Winkel als 60° gegenüber der Öffnungs-Dichtfläche 16; 116 geneigt sein.

Beim ersten Ausführungsbeispiel kann statt des S-förmigen Federblechs kann auch ein andersartiges Federelement verwendet werden, welches geeignet ist, das oben beschriebene Rückschwenken des äußeren Schwenkarmteils 30 zu bewirken. Beispielsweise kann auch eine Spiralfeder oder ein elastisches Kunststoffelement verwendet werden.

Auch die Anschlagplatten 38 und 40 können andere Neigungswinkel aufweisen.

Das Klappen-Schwenkgelenk 22 kann sich auch auf der dem Grund-Schwenkgelenk 26 zugewandten Seite der zur Längsachse des inneren Schwenkarmteils 24 senkrechten Ebene befinden. In diesem Fall ist zweckmäßigerweise der äußere Schwenkarmteil 30 zu dieser Ebene gespiegelt am inneren Schwenkarmteil 28 befestigt.

Beim zweiten Ausführungsbeispiel kann statt der Blattfeder 131 auch eine andersartige federnde Anpresseinheit verwendet werden. Die Blattfeder 131 kann statt über den Schwenkarm-Befestigungswinkel 133 beziehungsweise den Klappen-Befestigungswinkel 135 auch in anderer Weise starr oder beweglich mit dem Schwenkarm 124 beziehungsweise dem Klappenblatt 118 verbunden sein.

## Patentansprüche

1. Absperrklappe insbesondere zur Verwendung in einer Vorrichtung zur Abgasreinigung, insbesondere zur regenerativen Nachverbrennung von Teer- und/oder Kohle und/ oder Graphitpartikeln in Abluft, mit einem Klappenblatt, welches zum Verschließen einer Ventilöffnung an einer dortigen Dichtfläche anliegt,
**dadurch gekennzeichnet, dass**
das Klappenblatt (18; 118) über wenigstens eine bewegliche Verbindung (22, 32; 131) an einem freien Ende eines Schwenkarms (24; 124) schwenkbar befestigt ist und der Schwenkarm (24; 124) über ein Grund-Schwenkgelenk (26; 126) relativ zur Dichtfläche (16; 116) schwenkbar befestigt ist, derart, dass das Klappenblatt (18; 118) zum Verschließen der Ventilöffnung (12; 112) zunächst eine Bewegung auf die Dichtfläche (16; 116) zu und beim Anliegen an der Dichtfläche (16; 116) eine Bewegung parallel zur Dichtfläche {16; 116) ausführt;
wobei
a) das Klappenblatt (18) über ein Klappen-Schwenkgelenk (22) an einem freien Ende des Schwenkarms (24) schwenkbar befestigt ist; der Schwenkarm (24) wenigstens einen inneren Schwenkarmteil (28) und einen dem Klappenblatt (18) zugewandten äußeren Schwenkarmteil (30) aufweist, die über ein Schwenkarmgelenk (32) verbunden sind, und der innere Schwenkarmteil (28) über das Grund-Schwenkgelenk (26) relativ zur Dichtfläche (16) schwenkbar befestigt ist;
oder
b) das Klappenblatt (118) über eine federnde Anpresseinheit, insbesondere eine Blattfeder (131), an dem freien Ende des Schwenkarms (124) befestigt ist.

2. Absperrklappe nach Anspruch 1, **dadurch gekennzeichnet, dass** die Schwenkachsen (26a, 32a, 22a) des Grund-Schwenkgelenks (26), des Schwenkarmgelenks (32) und des Klappen-Schwenkgelenks {22) parallel verlaufen und das Klappen-Schwenkgelenk (22) bezüglich des Schwenkarmgelenks (32) so positioniert ist, dass beim Schließen der Absperrklappe (10) das an der Dichtfläche (16) anliegende Klappenblatt (18) ein Drehmoment auf den äußeren Schwenkarmteil (30) ausübt, welches das Schwenken des äußeren Schwenkarmteils (30) und eine Verschiebung des Klappenblatts (18) parallel zur Dichtfläche (16) bewirkt.

3. Absperrklappe nach Anspruch 1 oder 2, **dadurch gekennzeichnet, dass** das Schwenkarmqelenk (32) über ein Anschlagmittel (38) verfügt, welches die Schwenkbewegung des äußeren Schwenkarmteils (30) relativ zu dem inneren Schwenkarmteil (28) wenigstens beim Schließen der Absperrklappe (10) begrenzt.

4. Absperrklappe nach Anspruch 3, **dadurch gekennzeichnet, dass** das Schwenkarmgelenk (32) ein Rückstellelement (44) aufweist, welches in einer der geschlossenen Absperrklappe (10) entsprechenden Schließstellung der Schwenkarmteile (28, 30) gespannt ist und das den äußeren Schwenkarmteil (30) beim Öffnen der Absperrklappe (10) aus der Schließstellung in eine Öffnungsstellung schwenkt.

5. Absperrklappe nach einem der Ansprüche 1 bis 4, **dadurch gekennzeichnet, dass** das Klappen-Schwenkgelenk (22) über ein Anschlagmittel (40) verfügt, welches die Schwenkbewegung des Klappenblatts (18) relativ zum äußeren Schwenkarmteil (30) wenigstens beim Öffnen der Absperrklappe (10) begrenzt.

6. Absperrklappe nach einem der vorherigen Ansprüche, **dadurch gekennzeichnet, dass** das Klappenblatt (18) und die Dichtfläche (16) eben sind.

## Claims

1. Shut-off flap, in particular for use in a device for exhaust-gas purification, in particular for the regenerative afterburning of particles of tar and/or carbon and/or graphite in exhaust air, having a flap blade which, in order to close a valve opening, lies on a sealing surface there,
**characterized in that**
the flap blade (18; 118) is fastened pivotably via at least one movable connection (22, 32; 131) to a free end of a pivot arm (24; 124) and the pivot arm (24; 124) is fastened pivotably relative to the sealing surface (16; 116) via a base pivot joint (26; 126) in such a manner that, in order to close the valve opening (12; 112), the flap blade (18; 118) first of all executes a movement towards the sealing surface (16; 116) and, upon lying against the sealing surface (16; 116), executes a movement parallel to the sealing surface (16; 116); wherein
a) the flap blade (18) is fastened pivotably to a free end of the pivot arm (24) via a flap pivot joint (22); the pivot arm (24) has at least one inner pivot arm part (28) and an outer pivot arm part (30) facing the flap blade (18), said pivot arm parts being connected via a pivot arm joint (32), and the inner pivot arm part (28) is fastened pivotably relative to the sealing surface (16) via a base pivot joint (26);
or
b) the flap blade (118) is fastened to the free end of the pivot arm (124) via a resilient pressing unit, in particular a leafspring (131).

2. Shut-off flap according to Claim 1, **characterized in that** the pivot axes (26a, 32a, 22a) of the base pivot joint (26), of the pivot arm joint (32) and of the flap pivot joint (22) run parallel, and the flap pivot joint (22) is positioned with respect to the pivot arm joint (32) in such a manner that, when the shut-off flap (10) is closed, the flap blade (18) lying against the sealing surface (16) exerts a torque on the outer pivot arm part (30), the torque bringing about the pivoting of the outer pivot arm part (30) and a displacement of the flap blade (18) parallel to the sealing surface (16).

3. Shut-off flap according to Claim 1 or 2, **characterized in that** the pivot arm joint (32) has a stop means (38) which limits the pivoting movement of the outer pivot arm part (30) relative to the inner pivot arm part (28) at least during the closing of the shut-off flap (10).

4. Shut-off flap according to Claim 3, **characterized in that** the pivot arm joint (32) has a resetting element (44) which is tensioned in a closed position of the pivot arm parts (28, 30) that corresponds to the closed shut-off flap (10) and which pivots the outer pivot arm part (30) from the closed position into an open position when the shut-off flap (10) is opened.

5. Shut-off flap according to one of Claims 1 to 4, **characterized in that** the flap pivot joint (22) has a stop means (40) which restricts the pivoting movement of the flap blade (18) relative to the outer pivot arm part (30) at least during the opening of the shut-off flap (10) .

6. Shut-off flap according to one of the preceding claims, **characterized in that** the flap blade (18) and the sealing surface (16) are flat.

## Revendications

1. Clapet d'arrêt à utiliser en particulier dans un dispositif d'épuration d'effluents gazeux, en particulier pour post-combustion régénérative de particules de goudron et/ou de charbon et/ou de graphite dans l'air sortant, doté d'une lame de clapet, laquelle appuie sur une surface étanche se trouvant sur une ouverture de ventilation afin de fermer celle-ci, **caractérisé en ce que**
la lame de clapet (18 ; 118) est fixée en pivotement à une extrémité libre d'un bras de pivot (24 ; 124) par le biais d'au moins une liaison mobile (22, 32 ; 131) et le bras de pivot (24 ; 124) est fixé en pivotement par rapport à la surface étanche (16 ; 116) par le biais d'une articulation pivotante de base (26 ; 126), de sorte que la lame de clapet (18 ; 118) exécute d'abord un déplacement vers la surface étanche (16 ; 116) et, lorsqu'elle appuie sur la surface étanche (16 ; 116), un déplacement parallèle à la surface étanche (16 ; 116) afin de fermer l'ouverture de ventilation (12 ; 112) ; dans lequel
a) la lame de clapet (18) est fixée en pivotement à une extrémité libre d'un bras de pivot (24) par le biais d'une articulation pivotante de clapet (22) ; le bras de pivot (24) comporte au moins une partie interne de bras de pivot (28) et une partie externe de bras de pivot (30) tournée vers la lame de clapet (18), lesquelles sont reliées par le biais d'une articulation de bras de pivot (32), et la partie interne de bras de pivot (28) est fixée en pivotement par rapport à la surface étanche (16) par le biais de l'articulation pivotante de base (26),
ou
b) la lame de clapet (118) est fixée à l'extrémité libre du bras de pivot (124) par le biais d'une unité de pression élastique, en particulier d'un ressort à lame (131).

2. Clapet d'arrêt selon la revendication 1, **caractérisé en ce que** les axes de pivot (26a, 32a, 22a) de l'articulation pivotante de base (26), de l'articulation de bras de pivot (32) et de l'articulation pivotante de clapet (22) sont parallèles et l'articulation pivotante de clapet (22) est positionnée par rapport à l'articulation de bras de pivot (32) de telle sorte que lorsque le clapet d'arrêt (10) est fermé, la lame de clapet (18) appuyant sur la surface étanche (16) exerce un couple sur la partie externe de bras de pivot (30) qui opère un pivotement de la partie externe de bras de pivot (30) et un déplacement de la lame de clapet (18) parallèlement à la surface étanche (16).

3. Clapet d'arrêt selon la revendication 1 ou 2, **caractérisé en ce que** l'articulation de bras de pivot (32) dispose d'un moyen de butée (38) qui limite le mouvement de pivot de la partie externe de bras de pivot (30) par rapport à la partie interne de bras de pivot (28) au moins lorsque le clapet d'arrêt (10) est fermé.

4. Clapet d'arrêt selon la revendication 3, **caractérisé en ce que** l'articulation de bras de pivot (32) comporte un élément de rappel (44), lequel est tendu dans une position fermée des parties de bras de pivot (28, 30) correspondant au clapet d'arrêt fermé (10) et lequel pivote la partie externe de bras de pivot (30) de la position fermée à une position ouverte lorsque le clapet d'arrêt (10) est ouvert.

5. Clapet d'arrêt selon l'une des revendications 1 à 4, **caractérisé en ce que** l'articulation pivotante de clapet (22) du clapet d'arrêt dispose d'un moyen de butée (40), lequel limite le mouvement de pivot de la lame de clapet (18) par rapport à la partie externe de bras de pivot (30) au moins lorsque le clapet d'arrêt (10) est ouvert.

6. Clapet d'arrêt selon l'une des revendications précédentes, **caractérisé en ce que** la lame de clapet (18) et la surface étanche (16) sont planes.
